# EUROPEAN PATENT SPECIFICATION

(11) **EP 3 471 529 B1**
(45) Date of publication and mention of the grant of the patent: **11.08.2021**
(21) Application number: 17751123.5
(22) Date of filing: 20.06.2017
(51) Int. Cl.: A01D 34/01, A01D 34/73, A01D 43/14

(54) **APPARATUS FOR MOWING GRASS, WEEDS OR THE LIKE**
VORRICHTUNG ZUM MÄHEN VON GRAS, UNKRAUT ODER DERGLEICHEN
APPAREIL POUR FAUCHER DE L'HERBE, DES MAUVAISES HERBES OU SIMILAIRE

(30) Priority: 21.06.2016 IT UA20164575
(43) Date of publication of application: 24.04.2019
(73) Proprietor: Micheletti, Giorgio, 37015 Sant'Ambrogio di Valpolicella (VR) (IT); Mayer, Erardo Mateo, 20900 Monza (MB) (IT)
(72) Inventor: Micheletti, Giorgio, 37015 Sant'Ambrogio di Valpolicella (VR) (IT); Mayer, Erardo Mateo, 20900 Monza (MB) (IT)
(74) Representative: Autuori, Angelo
(86) International application number: PCT/IB2017/053663
(87) International publication number: WO 2017/221150

(56) References cited:
- EP-A1- 0 893 047
- EP-A1- 2 888 941
- WO-A1-2013/006921
- US-A- 5 385 106
- US-A1- 2002 069 630
- US-A1- 2009 077 940

## Description

### Field of the invention

The present invention is generally applicable in the technical field of the apparatus for mowing, and it particularly relates an apparatus for mowing an area of interest by a very high pressure working fluid.

### Background of the invention

Apparatus for mowing areas of interest that use a blade activated by an engine such as a riding lawn mower are known.

Different types of apparatus which are mounted on a special vehicle or which are towed by a tractor are also known. In particular, such apparatus have typically one or more rotating or oscillating blades.

Such apparatus may be improved, particularly with regard to the efficiency and speed of mowing. Moreover, such apparatus may damage the area of interest and/or tear the roots of the plants, grass or the like.

From the documents US 2002069630, EP 2888941 and US 5385106 apparatus for mowing, destroying and/or inhibiting the regrowth of the weed are known.

### Summary of the invention

The object of the present invention is to at least partially overcome the above mentioned drawbacks by providing an apparatus for mowing an area having features of high functionality and low cost.

Another object of the invention is to provide an apparatus for mowing an area that allows a faster working of the same area.

Another object of the invention is to provide an apparatus for mowing an area that preserves the integrity of the mowing area.

Another object of the invention is to provide an apparatus for mowing an area having different conformations.

Such objects, as well as others which will appear more clearly hereinafter, are fulfilled by a system according to claim 1.

In a further aspect such objects, as well as others which will appear more clearly hereinafter, are fulfilled by a method according to claim 9.

The dependent claims describe advantageous embodiments of the invention.

### Brief description of the drawings

Further features and advantages of the invention will become more evident by reading the detailed description of some preferred but not exclusive embodiments, shown by way of non-limiting example with the help of the annexed drawing, wherein:
**FIG. 1** is a schematic top view of an apparatus **1** mounted on a vehicle **V;**
**FIGs. 2A** and **2B** are an enlarged view of some details of the apparatus 1 according to different embodiments;
**FIG. 3** is a schematic side view of the apparatus **1** mounted on the vehicle **V;**
**FIGs. 4A** and **5A** are an enlarged side view of some detail of FIG. 3 wherein a first and a second spraying device **20, 30** are schematically shown;
**FIGs. 4B** and **5B** are an enlarged view of some details respectively of FIG. 4A and FIG. 5A.

### Detailed description of some preferred embodiments

With reference to the above mentioned figures, an apparatus **1** for mowing grass, weeds or the like on an area of interest **S** by at least one first working fluid **F1**, which for example may be pressurized water and/or steam is described.

The apparatus 1 is used with a vehicle **V** or the like, such as a truck or a tractor, which may move along a forwarding direction **d.**

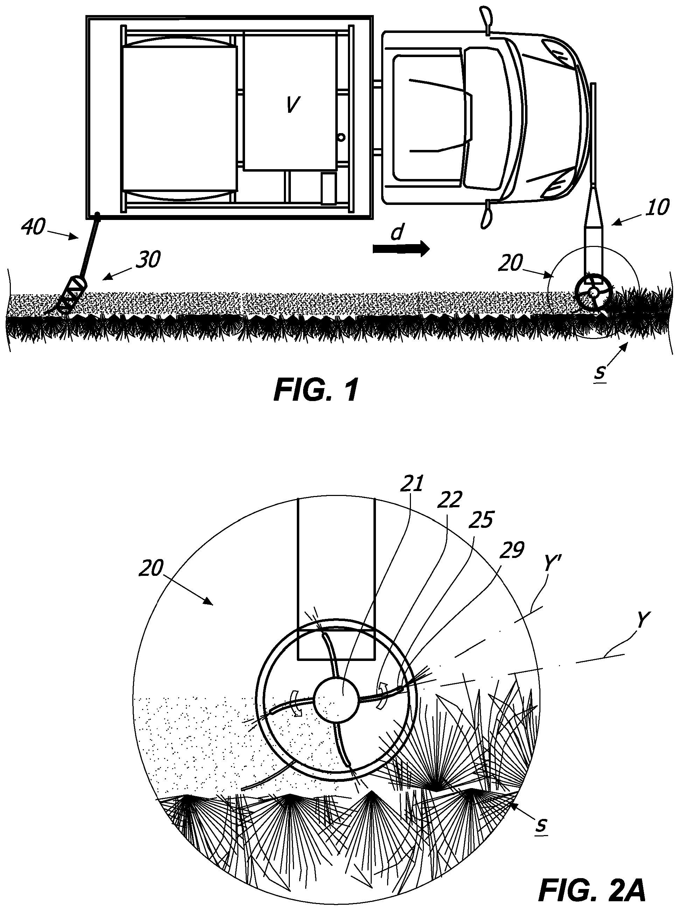

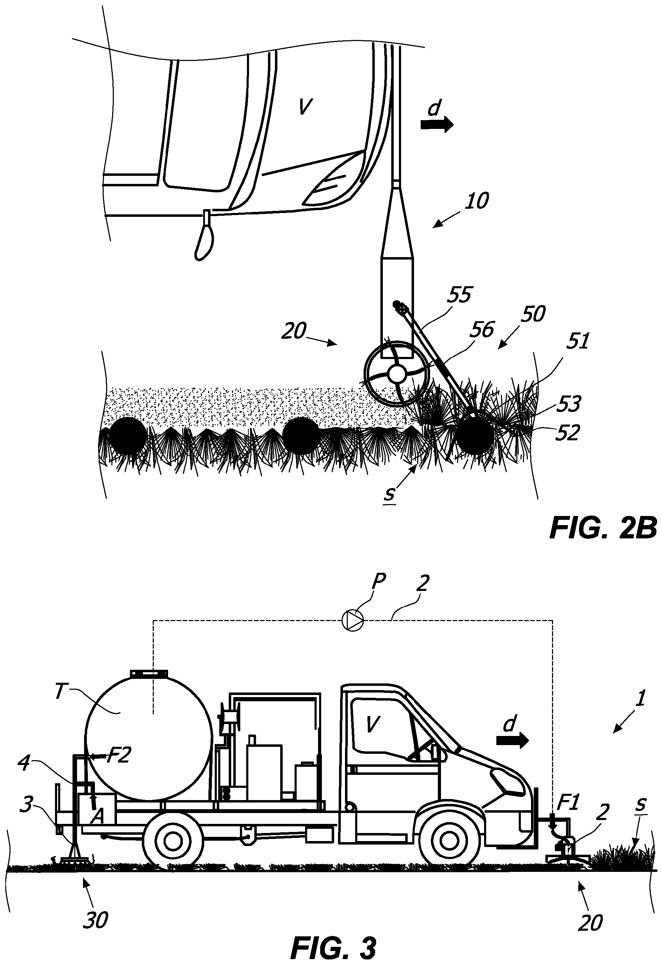

The area of interest **S** may be an agricultural field, a roadway, a railway, a ditch, a land near a trees row as shown in Fig. 2B or a roadside or the area near to the roadway, as shown in Fig. 2A.

In the latter case, in particular, the movement of the vehicle **V** along the road may define the forwarding direction **d.**

It is understood that such embodiments are not limitative inasmuch the vehicle **V** may move in any direction and, more generally, the apparatus **1** may be used with different types of vehicles without thereby departing from the purpose of the present invention.

The mowing of the area of interest S comprises a step of mowing of grass, weed or the like which are thereon by a high pressure working fluid **F1** and a step of inhibition of grass, weeds or the like by an hot working fluid **F2.**

The text describes an apparatus **1** for mowing grass or weeds, but it is understood that the apparatus **1** may also be used for the mowing of small shrubs, plants, rams and the like.

The apparatus 1 comprises at least one spraying device **20** of the working fluid **F1** which may be mounted on the vehicle **V** by mounting means **10.**

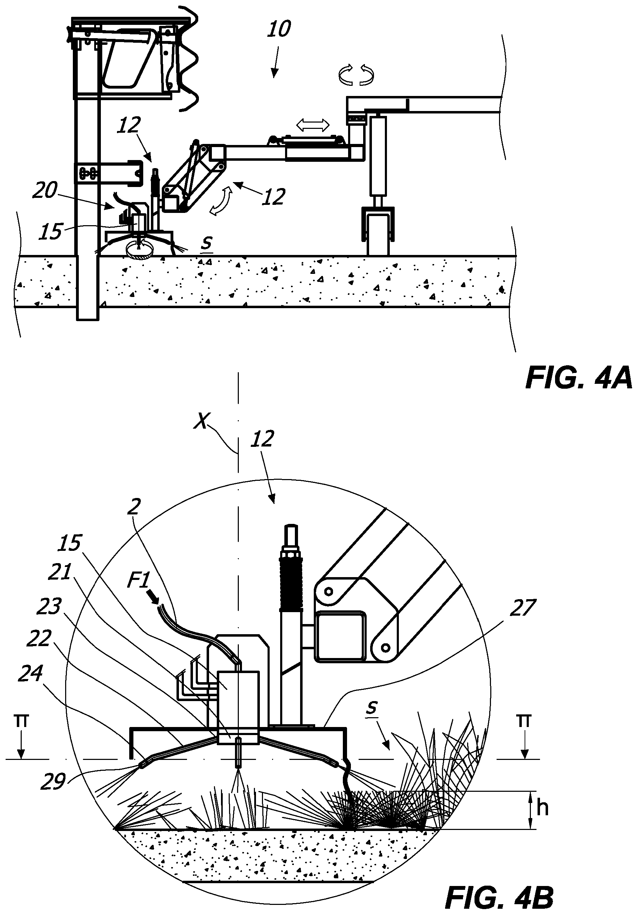

For example, as shown in FIG. 4A, the latter may comprise a plurality of connecting elements, such as bars or tubes, which are integrally coupled to the vehicle **V,** for example with the vehicle body.

According to a different embodiment, not shown in the annexed figures, the mounting means **10** may include a trailer or similar, which may be coupled with the vehicle **V** by known systems, for example by a suitable coupling hook.

In any case, the movement of the vehicle **V** along the forwarding direction **d** may correspond to the movement of the spraying device **20** along a direction substantially parallel or coincident with the same forwarding direction.

The spraying device **20** is then configured so as to spray the working fluid **F1** toward the area of interest **S.**

The apparatus 1 comprises at least one feed line **2** of the working fluid **F1.**

The spraying device 20 comprises at least one high pressure spraying nozzle **29** which is fluidically connected with said feed line **2.**

The latter may include a water tank **T** and includes a high pressure pump **P** of a known type to pressurize the working fluid **F1.**

The high pressure pump P is configured so that the working fluid **F1** flowing from the nozzle **29** has a pressure of at least 250 bar, preferably at least 500 bar, and even more preferably at least 1000 bar.

The spraying device **20** may be configured so that the area of interest **S** susceptible to be hit by the working fluid **F1** may be increased by the pressure increasing. In other words, by suitable adjustment valve means, the operator may vary the pressure and thus the size of the area of interest to be hit by the working fluid **F1.**

Advantageously, the flow of the working fluid **F1** may not necessarily be stopped in order to adjust the flow of the working fluid **F1**. Moreover, the valve means may be spaced apart the nozzles **29** so that the operator may act safely thereon.

As shown in Fig. 4B, possibly a protective carter **27** may be provided so as to prevent the impact of the cut grass and/or the working fluid **F1** and/or the stones or the like with the vehicle **V** and/or the operator.

In particular, the latter may remain within the vehicle **V** during the use of the apparatus **1.** Thanks to such feature the latter may be particularly safe.

The working fluid **F1** may be sprayed at any temperature.

Possibly, the feed line **2** may include heating means for preheating the working fluid **F1** so that the latter is sprayed at a temperature of about 80 °C - 90 °C.

In this way the grass cutting may be particularly effective.

As best explained below and schematically shown in FIG. 4B, the spraying device **20** is configured so as the high pressure jet flowing from the nozzle **29** hits the grass on the area of interest **S** in a substantially transversely way to cut the grass.

In this way, the jet flowing from the nozzle **29** may cut the grass without rooting out the root. In this way, advantageously, the integrity of the area of interest **S** may be preserved.

The nozzle **29** is mounted on the spraying device **20** to rotate in a plane **π** or to oscillate along the same plane **π**.

The nozzle 29 sprays a working fluid jet **F1** in a direction substantially parallel or coinciding to the plane **π** or slightly inclined with respect the same plane **π**.

Preferably, the plane **π** may be substantially parallel to the area of interest **S.**

Suitably, the mounting means **10** may be configured so that during the use of the spraying device **20** the plane **π** has a height from the area of interest **S** so that the jet flowing from the nozzle **29** cuts the grass, weeds or the like at a predetermined height h from the area of interest **S.**

Possibly in order to vary such predetermined height **h,** the apparatus **1** may comprise adjusting means **12** for varying such height **h** as required. Preferably, the same mounting means **10** may include such adjusting means **12.**

For example, the height **h** may be of 3 cm to 20 cm, preferably of 3 cm to 10 cm.

In case the nozzle **29** is movable mounted on the spraying device **20** to oscillate along the plane **π**, the apparatus may include known systems to promote the oscillation. For example, an oscillating plate activated by suitable motor means on which the nozzles **29** are integrally mounted may be provided.

On the other hand, according to a preferred but not exclusive embodiment shown in the annexed figures, the spraying device **20** may comprise at least one rotating element **21** around an axis **X** which may be substantially perpendicular to the plane **π**.

Suitably, the spraying device **20** may include motor means **15** of known type acting on the rotating element **21** to promote the rotation thereof.

The nozzle **29** may be operatively coupled with the rotating element **21** to integrally rotate around the axis **X.** In particular, the nozzle **29** may be oriented so as the jet flowing therefrom has a direction parallel or coincident with the plane **π** or slightly inclined with respect to the same plane **π**.

Suitably, the nozzle **29** may be integrally coupled with the rotating element **21** or a tubular element **22** interposed between the rotating element **21** and the nozzle **29** may be provided, the tubular element **22** may be integrally coupled with the rotating element **21** and the nozzle **29.**

The tubular element **22** may have an inlet **23** for the working fluid **F1** and an outlet **24** defined by or fluidlically connected with the nozzle **29.** In other words, the tubular element **22** may also be fluidically connected with the feed line **2** of the working fluid **F1.**

Suitably, the tubular element **22** may define an axis **Y** substantially parallel to or lie on the plane **π** so that the same tubular element **22** rotates in a plane substantially parallel to or coinciding with the plane **π**.

According to an aspect of the invention, as shown in FIG. 2A, the tubular element **22** may comprise a curved end portion **25,** while the nozzle **29** may be coupled with the tubular element **22** in correspondence of such curved end portion **25** so that the jet flowing from the nozzle **29** has a direction substantially coaxial to an axis **Y'** substantially transverse to the axis **Y.**

In particular, such end portion **25** may be placed concordant with the rotation direction of the tubular element **22** so as the latter, particularly the end portion **25** has a substantially "C" shape concavity. Thanks to this configuration, during the rotation of the tubular element **22,** the grass to be cut may remain within the concavity so as to facilitate the cutting operation thereof.

According to a particular embodiment, the curved end portion **25** may be movable to rotate around the axis **Y** so as the axis **Y'** and thus the jet flowing from the nozzle **29** is slightly inclined with respect to the plane **π**.

In this way, the size of the area of interest **S** hit by the working fluid **F1** may be varied.

Moreover, advantageously, in case the area of interest **S** is a rough ground, the track ballast of a railway or the like, the grass or weeds may be cut at a relatively low height **h,** while the nozzles **29** may be remain at a distance from the ground sufficiently great so as not to risk to damage the same nozzles **29,** for example due to an impact against a stone.

Thanks to these features, the apparatus **1** may be highly effective even on different types of ground without the need for particularly modifications by the operator. Moreover, it may not be necessary to stop the spraying device **20** in case of variation of the type of the area of interest **S.**

Possibly, in case the apparatus **1** is used in a trees row, vineyard or the like, the same apparatus **1** may comprise a protective element **50** to prevent the working fluid jet **F1** flowing from the nozzles **29** impacts against the stem of a tree or vine during the use thereof to mow the grass near the same trees row.

In particular, the protection element **50** may for example include a plate-shaped element **51** coupled with the spraying device **20** or coupled with the mounting means **10** by a connecting bar **55,** as shown in FIG. 2B.

Suitably, the bar **55** may be rotationally coupled with the mounting means **10** and/or with the plate-shaped element **51** and may be configured so as upon the spraying device **20** advances, the protection element **50** may rotate with respect to the mounting means **10** between a start position and an end position remaining in contact with the stem of the tree.

Preferably, the plate-shaped element **51** may be bent so as to form a concavity susceptible to be faced towards the tree so as during such rotation a side **52** thereof may be at least partially in contact with the tree, while the opposite side **53** may be hit by the working fluid jet **F1** flowing from the nozzles **29.**

Once the end position is reached, at which the spraying device **20** has a distance from the stem of the tree so that the jet flowing from the nozzles **29** does not hit/damage the stem of the tree, the protection element **50** may rotate to return in the start position.

For this purpose, returning means **56** for example a returning spring may be provided, the latter acting on the arm **55** and/or the plate-shaped element **51** to promote the return from the end position to the start position.

According to another aspect of the invention, the spraying device **20** may also comprise a plurality of nozzles **29,** e.g. four nozzles. Suitably, each of the latter may be fluidlically connected with the feed line **2** and may integrally rotate with the rotating element **21.** Possibly, for this purpose a plurality of tubular elements **22** interposed between the rotating element **21** and the nozzles **29** analogously to what it is above described may be provided.

In this way the cutting efficiency of the apparatus **1** may be particularly high.

Moreover, thanks to this feature, the spraying device **20** may move at a relatively high speed. For example, the apparatus **1** may move along its forwarding direction **d** with a forwarding speed of more than 0.3 m/s, preferably at least 0.6 m/s even more preferably at a speed of about 1 m/s.

As above described, a step of inhibiting grass, weeds, or the like is provided by the working fluid **F2,** for example the working fluid **F2** may be water and/or steam.

In particular, such step may be accomplished subsequently the cutting step by the same apparatus 1 and may be particularly suitable for slowing the regrowth of the cut grass, weeds or the like.

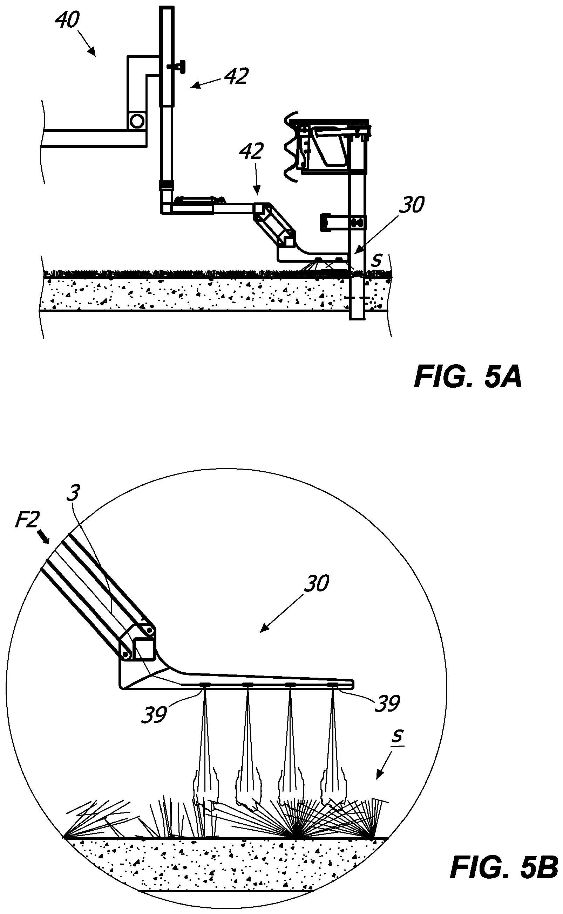

As shown in Figs. 5A and 5B, the apparatus **1** thus comprises a feed line **3** of the working fluid **F2,** a spraying device **30** and means **40** for mounting the latter to the vehicle **V** so that the move of the vehicle **V** along the forwarding direction **d** corresponds to the move of the spraying device **30** along a direction coincident or parallel thereto in an analogous manner to what is above described about the spraying device **20.**

According to the invention, the spraying device **30** comprises at least one nebulizer nozzle **39,** preferably a plurality of spraying nozzles, fluidlically connected with the feed line **3,** which may be mounted on the spraying device **30** so that the latter sprays a jet of working fluid **F2** toward the area of interest **S.**

Possibly, the mounting means **40** may further include adjustment means **42** for varying the distance of the nebulizer nozzles **39** from the area of interest **S.**

The feed line 3 includes known heating means to heat the working fluid **F2** so as the spraying device **30** sprays the second hot working fluid F2 toward the area of interest **S.**

Such working fluid F2 has a temperature of at least 100 °C, preferably of at least 120 °C.

The working fluid **F2** may be steam, and may be additivated so as the inhibition step of the regrowth is particularly effective and lasting.

For example, such additive **A** may act to promote the distribution of the working fluid **F2** to the cut grass.

Moreover, the additive **A** may slow down the heat transmission from the fluid **F2** to the cut grass so as the action is longer and/or may react with the water of the same working fluid **F2** to develop further heat.

In this way, a disorder of the cell growth is achieved.

The additive **A** may be organic so as not to pollute the area of interest **S.**

Moreover, the additive **A** may act on the grass and/or the area of interest **S** to decontaminate and/or reclaim the latter. Such feature may be particularly advantageous in case the apparatus **1** is used to mow the grass and/or weed adjacent to a road.

Suitably, as schematically shown in Fig. 3, the apparatus **1** may comprise a feed line **4** for the additive **A,** which may flow into the feed line **3** so as the spraying device **40** sprays a working fluid **F2** and additive mixture.

In any case, preferably, the inhibition step may be accomplished immediately after the cutting step.

For the purpose, as schematically shown in Fig. 1, the mounting means **10, 40** may be configured so as when the vehicle **V** advances along the forwarding direction **d,** first the working fluid **F1** flowing from the spraying device **20** acts on the area of interest **S** to cut the grass, weeds or the like and then the working fluid **F2** flowing from the spraying device **40** acts on the same area of interest **S** to inhibit its regrowth, possibly added with the additive **A** as above described.

Preferably, during the use the vehicle **V** may advance continuously. On the other hand, the first nozzle **29** and the second nozzle **39** may spray the first and second working fluid **F1**, **F2** continuously.

From the above description, it appears evident that the invention fulfils the intended objects.

The invention is susceptible of numerous modifications and variations, all falling within the scope of the annexed claims. All the details may be replaced with other technically equivalent elements, and the materials may be different according to requirements, without departing from the scope of the invention defined by the annexed claims.

## Claims

1. A system for mowing grass, weeds or the like on an area of interest **(S),** comprising:
- a vehicle **(V)** susceptible to move on said area of interest **(S)** along a forwarding direction **(d);**
- at least one apparatus for mowing grass, weeds or the like on an area of interest **(S);**
wherein the apparatus comprises:
- at least one first feed line **(2)** of a first working fluid (**F1**) including at least one high pressure pump **(P)** for pumping the first working fluid (**F1**) at a pressure of at least 250 bar;
- at least one first spraying device **(20)** of the first working fluid (**F1**) towards the area of interest **(S),** said at least one first spraying device **(20)** including at least one first high-pressure spraying nozzle **(29)** fluidically connected with the at least one first feed line **(2);** said at least one first spraying device **(20)** being mounted on the vehicle **(V);**
wherein said at least one first nozzle **(29)** is movably mounted on said at least one first spraying device **(20)** to rotate in a plane (**π**) or to oscillate along the same plane (**π**), said at least one first spraying nozzle **(29)** being further mounted on said at least one first spraying device **(20)** for spraying a jet of the first working fluid (**F1**) along a direction which is substantially parallel to or lying on said plane (**π**), or a direction which is inclined with respect to the same plane (**π**), in such a manner to transversely hit the grass, weeds or the like, thus cutting the latter; **characterized in that** the system further comprises at least one second feed line **(3)** for a second working fluid **(F2),** at least one second spraying device **(30),** the latter being mounted on the vehicle **(V),** said at least one second feed line **(3)** comprising heating means to heat the working fluid **(F2)** at a temperature of at least 100 °C, said at least one second spraying device **(30)** comprising at least one second nebulizer nozzle **(39)** fluidically connected with said second feed line **(3),** said at least one second nebulizer spraying nozzle **(39)** being mounted on said at least one second spraying device **(30)** for spraying the hot nebulized second working fluid **(F2)** toward the area of interest **(S)** so as to inhibit the regrowth of the grass;
wherein said at least one first spraying device **(20)** and at least one second spraying device **(30)** are mounted on said vehicle **(V)** in a spatial relationship such as upon the move along the forwarding direction **(d)** of the vehicle **(V)** acts on the area of interest **(S)** at first the first working fluid (**F1**) flowing from said at least one first spraying device **(20)** to cut the grass, weeds or the like and then the hot nebulized second working fluid **(F2)** flowing from said at least one second spraying device **(30)** to inhibit its regrowth.

2. System according to claim 1, wherein said at least one first spraying device **(20)** comprises a rotating element **(21)** around a first axis **(X)** substantially perpendicular to said plane (**π**) and motor means **(15)** acting on said rotating element **(21)** to promote its rotation, said at least one first spraying nozzle **(29)** being operatively coupled with said rotating element **(21)** to integrally rotate therewith.

3. System according to the preceding claim, wherein said at least one first spraying device **(20)** comprises at least one tubular element **(22)** coupled with said rotating element **(21)** to integrally rotate therewith, said at least one tubular element **(22)** having an inlet **(23)** for the first working fluid (**F1**) and an outlet **(24)** defined by or fluidically connected to said at least one first spraying nozzle **(29),** said at least one first tubular element **(22)** being elongated to define a second axis **(Y)** substantially perpendicular to said first axis **(X).**

4. System according to the preceding claim, wherein said at least one tubular element **(22)** comprises a curved end portion **(25),** said at least one first spraying nozzle **(29)** being coupled with said tubular element **(22)** in correspondence of said curved end portion **(25)** so that the jet flowing out from said at least one first spraying nozzle **(29)** is substantially transverse with respect to said second axis **(Y),** said curved end portion **(25)** having concavity according to the rotation direction of the rotating element **(21).**

5. System according to the preceding claim, wherein said curved end portion **(25)** is movable to rotate around said second axis **(Y)** so that once rotated, the jet flowing out from said at least one first spraying nozzle **(29)** is slightly inclined with respect to said plane (**π**).

6. System according to any one of the preceding claims, wherein said plane (**π**) is substantially parallel to the area of interest **(S),** said first mounting means **(10)** being configured so that during use said plane (**π**) has a predetermined height from the area of interest **(S)** so that the jet flowing out from said at least one first spraying nozzle **(29)** cuts the grass, weeds or the like at a predetermined height **(h)** from the area of interest **(S),** the apparatus **(1)** further comprising adjusting means **(12)** for varying said predetermined height **(h).**

7. System according to claim 1, comprising at least one third feed line **(4)** for an additive **(A),** the latter joining said at least one second feed line **(3)** so as said at least one second spraying device **(30)** sprays a mixture of hot nebulized second working fluid **(F2)** and additive (**A**).

8. System according to one or more of the preceding claims, wherein said at least one first spraying device **(20)** and at least one second spraying device **(30)** are mounted on said vehicle **(V)** so that the at least one first high pressure spraying nozzle **(29)** upstream of said at least one second spraying device **(30)** along the forwarding direction **(d)** of the vehicle **(V).**

9. A method for mowing grass, weeds or the like on an area of interest **(S)** comprising the following steps:
- cutting grass, weeds or the like on the area of interest **(S)** by a first working fluid (**F1**) at a pressure of at least 250 bar;
- inhibiting the regrowth of the grass, weeds or the like by a hot nebulized second working fluid **(F2);**
wherein said inhibition step is carried out after the cutting step;
wherein said cutting step is carried out by at least one first spraying device **(20)** as defined in claim 1, and said inhibition step is carried out by at least one second spraying device **(30)** as defined in claim 1.

## Patentansprüche

1. System zum Mähen von Gras, Unkraut und dergleichen auf einer Fläche von Interesse (S), das Folgendes umfasst:
- ein Fahrzeug (V), das anwendbar ist, um sich auf der Fläche von Interesse (S) entlang einer Vorwärtsrichtung (d) zu bewegen;
- mindestens eine Einrichtung zum Mähen von Gras, Unkraut oder dergleichen auf einer Fläche von Interesse (S);
wobei die Einrichtung Folgendes umfasst:
- mindestens eine erste Zufuhrleitung (2) eines ersten Arbeitsfluids (F1) einschließlich mindestens einer Hochdruckpumpe (P) zum Pumpen des ersten Arbeitsfluids (F1) mit einem Druck von mindestens 250 bar;
- mindestens eine erste Sprühvorrichtung (20) des ersten Arbeitsfluids (F1) in Richtung der Fläche von Interesse (S), wobei die mindestens eine erste Sprühvorrichtung (20) mindestens eine erste Hochdrucksprühdüse (29) aufweist, die mit der mindestens einen ersten Zufuhrleitung (2) fluidisch verbunden ist; wobei die mindestens eine erste Sprühvorrichtung (20) an dem Fahrzeug (V) montiert ist;
wobei die mindestens eine erste Düse (29) beweglich an der mindestens einen ersten Sprühvorrichtung (20) montiert ist, um in einer Ebene (π) zu rotieren oder um entlang der gleichen Ebene (π) zu oszillieren, wobei die mindestens eine erste Sprühdüse (29) ferner an der mindestens einen ersten Sprühvorrichtung (20) montiert ist zum Sprühen eines Strahls des ersten Arbeitsfluids (F1) entlang einer Richtung, die im Wesentlichen parallel zu der Ebene (π) ist oder auf ihr liegt, oder einer Richtung, die in Bezug auf die gleiche Ebene (π) derart geneigt ist, dass sie das Gras, das Unkraut und dergleichen querlaufend trifft und letzteres somit schneidet;
**dadurch gekennzeichnet, dass**
das System ferner mindestens eine zweite Zufuhrleitung (3) für ein zweites Arbeitsfluid (F2), mindestens eine zweite Sprühvorrichtung (30) umfasst, wobei letztere an dem Fahrzeug (V) montiert ist, die mindestens eine zweite Zufuhrleitung (3) ein Wärmemittel umfasst, um das Arbeitsfluid (F2) auf eine Temperatur von mindestens 100 °C zu erwärmen, die mindestens eine zweite Sprühvorrichtung (30) mindestens eine zweite Zerstäuberdüse (39) umfasst, die mit der zweiten Zufuhrleitung (3) fluidisch verbunden ist, die mindestens zweite Zerstäuberdüse (39) an der mindestens einen zweiten Sprühvorrichtung (30) zum Sprühen des heißen, zerstäubten zweiten Arbeitsfluids (F2) in Richtung der Fläche von Interesse (S) montiert ist, damit der Neuwuchs des Grases verhindert wird; wobei die mindestens eine erste Sprühvorrichtung (20) und mindestens eine zweite Sprühvorrichtung (30) an dem Fahrzeug (V) in einer räumlichen Beziehung montiert sind, damit bei der Bewegung entlang der Vorwärtsrichtung (d) des Fahrzeugs (V) auf die Fläche von Interesse (S) zuerst das erste Arbeitsfluid (F1) aus der mindestens einen ersten Sprühvorrichtung (20) strömt, um das Gras, das Unkraut und dergleichen zu schneiden, und dann das heiße, zerstäubte zweite Arbeitsfluid (F2) aus der mindestens einen zweiten Sprühvorrichtung (30) strömt, um deren Neuwuchs zu verhindern.

2. System nach Anspruch 1, wobei die mindestens eine erste Sprühvorrichtung (20) ein Rotationselement (21) um eine erste Achse (X) umfasst, die im Wesentlichen senkrecht zur Ebene (π) ist, und ein Motormittel (15), das auf das Rotationselement (21) wirkt, um dessen Rotation zu fördern, wobei die mindestens eine erste Sprühdüse (29) betriebsfähig mit dem Rotationselement (21) verbunden ist, um damit integral zu rotieren.

3. System nach dem vorhergehenden Anspruch, wobei die mindestens eine erste Sprühvorrichtung (20) mindestens ein rohrförmiges Element (22) umfasst, das mit dem Rotationselement (21) gekoppelt ist, um damit integral zu rotieren, wobei das mindestens eine rohrförmige Element (22) einen Einlass (23) für das erste Arbeitsfluid (F1) und einen Auslass (24), der durch die mindestens eine erste Sprühdüse (29) definiert ist oder fluidisch mit dieser verbunden ist, aufweist, wobei das mindestens eine erste rohrförmige Element (22) länglich ist, um eine zweite Achse (Y) zu definieren, die im Wesentlichen senkrecht zur ersten Achse (X) ist.

4. System nach dem vorhergehenden Anspruch, wobei das mindestens eine rohrförmige Element (22) einen gekrümmten Endabschnitt (25) umfasst, wobei die mindestens eine erste Sprühdüse (29) mit dem rohrförmigen Element (22) in Übereinstimmung mit dem gekrümmten Endabschnitt (25) gekoppelt ist, so dass der aus der mindestens einen ersten Sprühdüse (29) herausströmende Strahl in Bezug auf die zweite Achse (Y) im Wesentlichen querlaufend ist, wobei der gekrümmte Endabschnitt (25) eine Konkavität gemäß der Rotationsrichtung des Rotationselements (21) aufweist.

5. System nach dem vorhergehenden Anspruch, wobei der gekrümmte Endabschnitt (25) beweglich ist, um um die zweite Achse (Y) zu rotieren, so dass, sobald dieser rotiert wurde, der aus der mindestens einen ersten Sprühdüse (29) herausströmende Strahl in Bezug auf die Ebene (π) leicht geneigt ist.

6. System nach einem der vorhergehenden Ansprüche, wobei die Ebene (π) im Wesentlichen parallel zur Fläche von Interesse (S) ist, wobei das erste Montagemittel (10) so konfiguriert ist, dass die Ebene (π) bei Gebrauch eine vorbestimmte Höhe von der Fläche von Interesse (S) aufweist, so dass der aus der mindestens einen ersten Sprühdüse (29) herausströmende Strahl das Gras, das Unkraut und dergleichen in einer vorbestimmten Höhe (h) von der Fläche von Interesse (S) schneidet, wobei die Einrichtung (1) ferner ein Justiermittel (12) zum Ändern der vorbestimmten Höhe (h) umfasst.

7. System nach Anspruch 1, umfassend mindestens eine dritte Zufuhrleitung (4) für ein Additiv (A), wobei letzteres der mindestens einen zweiten Zufuhrleitung (3) zugefügt wird, so dass die mindestens eine zweite Sprühvorrichtung (30) ein Gemisch aus dem heißen, zerstäubten zweiten Arbeitsfluid (F2) und dem Additiv (A) versprüht.

8. System nach einem oder mehreren der vorhergehenden Ansprüche, wobei die mindestens eine erste Sprühvorrichtung (20) und die mindestens eine zweite Sprühvorrichtung (30) an dem Fahrzeug (V) montiert sind, so dass die mindestens eine erste Hochdrucksprühdüse (29) der mindestens einen zweiten Sprühvorrichtung (30) entlang der Vorwärtsrichtung (d) des Fahrzeugs (V) vorgeschaltet ist.

9. Verfahren zum Mähen von Gras, Unkraut oder dergleichen auf einer Fläche von Interesse (S), das die folgenden Schritte umfasst:
- Schneiden von Gras, Unkraut und dergleichen auf der Fläche von Interesse (S) durch ein erstes Arbeitsfluid (F1) mit einem Druck von mindestens 250 bar;
- Verhindern des Neuwuchses des Grases, Unkrauts oder dergleichen durch ein heißes, zerstäubtes zweites Arbeitsfluid (F2);
wobei der Schritt des Verhinderns nach dem Schritt des Schneidens durchgeführt wird;
wobei der Schritt des Schneidens von der mindestens einen ersten Sprühvorrichtung (20) wie in Anspruch 1 definiert durchgeführt wird, und der Schritt des Verhinderns von der mindestens einen zweiten Sprühvorrichtung (30) wie in Anspruch 1 definiert durchgeführt wird.

## Revendications

1. Système de tonte de gazon, de mauvaises herbes ou analogues sur une zone d'intérêt (S), comprenant :
- un véhicule (V) susceptible de se déplacer sur ladite zone d'intérêt (S) le long d'une direction d'avancement (d) ;
- au moins un appareil permettant de tondre du gazon, des mauvaises herbes ou analogues sur une zone d'intérêt (S) ;
dans lequel l'appareil comprend :
- au moins une première ligne d'alimentation (2) d'un premier fluide de travail (F1) comprenant au moins une pompe à haute pression (P) permettant de pomper le premier fluide de travail (F1) à une pression d'au moins 250 bars ;
- au moins un premier dispositif de pulvérisation (20) du premier fluide de travail (F) vers la zone d'intérêt (S), ledit au moins un premier dispositif de pulvérisation (20) comprenant au moins une première buse de pulvérisation à haute pression (29) connectée fluidiquement à l'au moins une première ligne d'alimentation (2) ; ledit au moins un premier dispositif de pulvérisation (20) étant monté sur le véhicule (V) ;
dans lequel ladite au moins une première buse (29) est montée de manière amovible sur ledit au moins un premier dispositif de pulvérisation (20) pour tourner dans un plan (π) ou pour osciller le long du même plan (π), ladite au moins une première buse de pulvérisation (29) étant montée en outre sur ledit au moins un premier dispositif de pulvérisation (20) pour pulvériser un jet du premier fluide de travail (F1) le long d'une direction qui est sensiblement parallèle audit plan (π) ou se trouvant dans ledit plan (π), ou d'une direction qui est inclinée par rapport au même plan (π), de manière à frapper transversalement l'herbe, les mauvaises herbes ou analogues, coupant ainsi ces dernières ;
**caractérisé en ce que**
le système comprend en outre au moins une deuxième ligne d'alimentation (3) pour un deuxième fluide de travail (F2), au moins un deuxième dispositif de pulvérisation (30), ce dernier étant monté sur le véhicule (V), ladite au moins une deuxième ligne d'alimentation (3) comprenant un moyen de chauffage pour chauffer le fluide de travail (F2) à une température d'au moins 100°, ledit au moins un deuxième dispositif de pulvérisation (30) comprenant au moins une deuxième buse de nébuliseur (39) connectée fluidiquement à la deuxième ligne d'alimentation (3), ladite au moins une deuxième buse de pulvérisation de nébuliseur (39) étant montée sur ledit au moins un deuxième dispositif de pulvérisation (30) pour pulvériser le deuxième fluide de travail chaud nébulisé (F2) vers la zone d'intérêt (S) de manière à empêcher la repousse de l'herbe ;
dans lequel ledit au moins un premier dispositif de pulvérisation (20) et au moins un deuxième dispositif de pulvérisation (30) sont montés sur ledit véhicule (V) dans une relation spatiale de sorte que lors du déplacement le long de la direction d'avancement (d) du véhicule (V), le premier fluide de travail (F1) agit d'abord sur la zone d'intérêt (S) en s'écoulant à partir dudit au moins un premier dispositif de pulvérisation (20) pour couper l'herbe, les mauvaises herbes ou analogues, et ensuite le deuxième fluide de travail chaud nébulisé (F2) en s'écoulant à partir dudit au moins un deuxième dispositif de pulvérisation (30) pour empêcher sa repousse.

2. Système selon la revendication 1, dans lequel ledit au moins un premier dispositif de pulvérisation (20) comprend un élément rotatif (21) autour d'un premier axe (X) sensiblement perpendiculaire audit plan (π) et un organe moteur (15) agissant sur ledit élément rotatif (21) pour favoriser sa rotation, ladite au moins une première buse de pulvérisation (29) étant couplée de manière opérationnelle audit élément de rotation (21) pour tourner solidairement avec celui-ci.

3. Système selon la revendication précédente, dans lequel ledit au moins un premier dispositif de pulvérisation (20) comprend au moins un élément tubulaire (22) couplé audit élément rotatif (21) pour tourner solidairement avec celui-ci, ledit au moins un élément tubulaire (22) comportant une entrée (23) pour le premier fluide de travail (F1) et une sortie (24) définie par ladite au moins une première buse de pulvérisation (29), ou connectée fluidiquement à celle-ci, ledit au moins un premier élément tubulaire (22) étant allongé pour définir un deuxième axe (Y) sensiblement perpendiculaire audit premier axe (X).

4. Système selon la revendication précédente, dans lequel ledit au moins un élément tubulaire (22) comprend une partie d'extrémité courbée (25), ladite au moins une première buse de pulvérisation (29) étant couplée audit élément tubulaire (22) en correspondance de ladite partie d'extrémité courbée (25) de sorte que le jet sortant de ladite au moins une première buse de pulvérisation (29) est sensiblement transverse par rapport audit deuxième axe (Y), ladite partie d'extrémité courbée (25) présentant une concavité en fonction du sens de rotation de l'élément rotatif (21).

5. Système selon la revendication précédente, dans lequel ladite partie d'extrémité courbée (25) est mobile pour tourner autour dudit deuxième axe (Y) de sorte qu'une fois en rotation, le jet sortant de ladite au moins une première buse de pulvérisation (29) est légèrement incliné par rapport audit plan (π).

6. Système selon l'une quelconque des revendications précédentes, dans lequel ledit plan (π) est sensiblement parallèle à la zone d'intérêt (S), ledit premier moyen de montage (10) étant configuré de sorte que pendant l'utilisation, ledit plan (π) comporte une hauteur prédéterminée à partir de la zone d'intérêt (S) de sorte que le jet sortant de ladite au moins une première buse de pulvérisation (29) coupe l'herbe, les mauvaises herbes ou analogues à une hauteur prédéterminée (h) à partir de la zone d'intérêt (S), l'appareil (1) comprenant en outre un moyen de réglage (12) permettant de modifier ladite hauteur prédéterminée (h).

7. Système selon la revendication 1, comprenant au moins une troisième ligne d'alimentation (4) pour un additif (A), ce dernier joignant ladite au moins une deuxième ligne d'alimentation (3) de sorte que ledit au moins un deuxième dispositif de pulvérisation (30) pulvérise un mélange d'un deuxième fluide de travail chaud nébulisé (F2) et d'un additif (A).

8. Système selon une ou plusieurs des revendications précédentes, dans lequel ledit au moins un premier dispositif de pulvérisation (20) et au moins un deuxième dispositif de pulvérisation (30) sont montés sur ledit véhicule (V) de sorte que l'au moins une première buse de pulvérisation à haute pression (29) se trouve en amont dudit au moins un deuxième dispositif de pulvérisation (30) le long de la direction d'avancement (d) du véhicule (V).

9. Procédé de tonte de gazon, de mauvaises herbes ou analogues sur une zone d'intérêt (S), comprenant :
- une étape de coupe de l'herbe, les mauvaises herbes ou analogues sur la zone d'intérêt (S) par un premier fluide de travail (F1) à une pression d'au moins 250 bars ;
- une étape d'inhibition de la repousse de l'herbe, des mauvaises herbes ou analogues grâce à un deuxième fluide de travail chaud nébulisé (F2) ;
dans lequel ladite étape d'inhibition est mise en œuvre après l'étape de coupe ;
dans lequel ladite étape de coupe est mise en œuvre par au moins un premier dispositif de pulvérisation (20) comme défini dans la revendication 1, et ladite étape d'inhibition est mise en œuvre par au moins un deuxième dispositif de pulvérisation (30) comme défini dans la revendication 1.
